(19) Europäisches Patentamt
European Patent Office
Office européen des brevets

(11) **EP 4 036 608 B1**

(12) **EUROPEAN PATENT SPECIFICATION**

(45) Date of publication and mention of the grant of the patent:
**24.04.2024 Bulletin 2024/17**

(21) Application number: **20840782.5**

(22) Date of filing: **03.07.2020**

(51) International Patent Classification (IPC):
$G01T\ 1/16$ (2006.01)    $G01T\ 1/167$ (2006.01)
$G21F\ 9/28$ (2006.01)    $G21C\ 19/42$ (2006.01)
$G21C\ 17/06$ (2006.01)    $G01T\ 1/36$ (2006.01)

(52) Cooperative Patent Classification (CPC):
**G21F 9/28; G01T 1/167; G01T 1/362; G21C 17/06; G21C 19/42;** Y02E 30/30

(86) International application number:
**PCT/RU2020/000329**

(87) International publication number:
**WO 2021/010864 (21.01.2021 Gazette 2021/03)**

(54) **METHOD OF MONITORING THE RADIONUCLIDE CONTENT OF RADIOACTIVE WASTE**

VERFAHREN ZUR ÜBERWACHUNG DES RADIONUKLIDGEHALTES RADIOAKTIVER ABFÄLLE

PROCÉDÉ DE CONTRÔLE DE CONTENU EN RADIONUCLÉIDES DE DÉCHETS RADIOACTIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2019 RU 2019122722**

(43) Date of publication of application:
**03.08.2022 Bulletin 2022/31**

(73) Proprietor: **State Atomic Energy Corporation "Rosatom"**
**on Behalf of The Russian Federation**
**Moscow 119017 (RU)**

(72) Inventors:
• **KOROTKOV, Aleksei Sergeevich**
**Moscow, 115563 (RU)**
• **ZHEREBTSOV, Aleksandr Anatolievich**
**Moscow, 127220 (RU)**
• **GERMANOV, Aleksandr Vladimirovich**
**Moscow, 108817 (RU)**
• **VARLAKOV, Andrey Petrovich**
**oblast, 141371 (RU)**
• **ELCIN, Vladimir Fedorovich**
**Moscow, 115280 (RU)**
• **CHURAKOV, Anton Konstantinovich**
**Moscow, 125319 (RU)**

(74) Representative: **Yalçiner Patent and Consulting Ltd.**
**Tunus Caddesi 85/3-4**
**Kavaklidere**
**06680 Ankara (TR)**

(56) References cited:
**JP-A- 2017 116 349    RU-C1- 2 571 309**

• ZHEREBTSOV A ET AL: "Method for estimating the content of alpha- and beta-emitting radionuclides in radioactive waste of radiochemical industries by the matrix of gamma-emitting radionuclides present", NUCLEAR AND RADIATION SAFETY, , vol. 3, no. 85 30 November 2016 (2016-11-30), pages 1-9, XP009533715, Retrieved from the Internet: URL:https://www.secnrs.ru/publications/nrs zine/3-85-2017/radionuclide_content_estima ting.pdf [retrieved on 2018-08-21]
• ZHEREBTSOV A. A. et al.: "Metod otsenki soderzhaniya alfa- i beta-izluchaiuschikh radionuklidov v RAO radiokhimicheskikh proizvodstv po matritse prisutstvuiushchikh gamma-izluchaiushchikh radionuklidov", Yadernaya i radiatsionnaya bezopasnost, nomer 3 (85)-2017. UDK 621.039.75,

**Description**

The invention relates to nuclear engineering and concerns methods of monitoring the radionuclide content of radioactive waste (RAW) being generated during processing of spent nuclear fuel (SNF). The specific scope of use of the invention is new generation energy complexes consisting of power units equipped with fast reactors with a liquid lead coolant and closed nuclear fuel cycle production.

The radiological hazard of RAW and, consequently, methods of RAW handling and disposal are determined by their radionuclide composition and specific activities of individual radionuclides, wherein the specific activity of radionuclides and the RAW category by radiation factor must be established during their certification. Most of these radionuclides belong to so-called hard-to-detect radionuclides (HD-RN), and direct measurement of their activity is associated with technologically complex procedures for sampling, preparation, measurement, and analysis of samples.

A promising solution to the issue of monitoring the HD-RN content of RAW is approach dubbed nuclide vector methodology or scaling-factor method [IAEA Nuclear Energy Series NW-T-1.18. Determination and use of scaling factors for waste characterization in NPP. IAEA, Vienna, Austria, 2009]. At the same time, nuclide vector means values of the relative fractions of activity of each radionuclide in the total activity of an object, which are established on the basis of the results of special representative spectrometric and radiometric measurements, and reasonably attributed to a number of objects of the same type, united by common material composition and generation source. This method is based on establishment of correlation relationships between radionuclide activity in the object and application of established correlations during radiation monitoring of the object accompanied by measurement of the activity of reference radionuclides only. The method implies separating radioactive waste of NPP into types by generation source (streams) and establishing a correlation relationship for each stream. The correlation relationship between specific activities of radionuclides is established within the stream limits and numerically expressed by a set of ratios of the partial specific activity of normalized hard-to-detect radionuclides to the specific activity of the reference radionuclide. During current monitoring, such approach allows to limit to the measurement of the activity of reference easy-to-detect gamma-emitting radionuclides with considerable energy and decay.

Various methods of RAW radionuclide monitoring have been proposed on the basis of nuclide vector methodology. In particular, a method of monitoring of radionuclides on the basis of gamma-spectrometry results is known, which uses correlation relationships for isotope $^{244}$Cm [Japanese Patent No. 5546174]. This method cannot be directly applied to specific composition RAW generated during operation of lead-cooled reactor plants and does not allow to monitor specific HD-RN thereof, notably activation products of the lead coolant.

The feasibility of the nuclide vector methodology in regard to power units equipped with lead-cooled reactors has also been confirmed, provided, however, it will be improved and adapted to this particular type of plants [Method of assessment of the content of alpha- and beta-emitting radionuclides in RAW of radiochemical production by matrix of present gamma-emitting radionuclides. Nuclear and Radiation Safety, No. 3 (85)-2017. UDC 621.039.75 or Zherebtsov et al., Nuclear and Radiation Safety, vol. 3, no. 85, 30 November 2016, pages 1-9, which discloses a method for monitoring the radionuclide content in radioactive waste produced during reprocessing of spent nuclear fuel of plants with fast fission liquid lead-cooled reactors]. The method of monitoring the radionuclide content of radioactive waste of power units equipped with fast reactors with a liquid lead coolant, which is presented in the quoted paper and selected as a prototype of the claimed method, includes preparatory step, where RAW streams are identified and their nuclide vectors are determined, and subsequent step of routine characterization of RAW in streams, wherein samples are taken to produce test samples for determining the radionuclide vector in the stream, specific activities of radionuclides in the test samples, decay of which is accompanied by gamma radiation, are determined using gamma-ray spectrometry, a reference radionuclide and target hard-to-detect radionuclides (HD-RN) are selected and their specific activities and standard uncertainties of the activities relatively to the activity of the reference radionuclide are determined, while at the step of routine RAW characterization the specific activities of the reference radionuclide only in RAW are measured using gamma-ray spectrometric non-destructive method, followed by calculation of the activities of the target HD-RN in RAW streams on the basis of the characteristics of identified nuclide-vectors, which were obtained at the preparatory step.

A disadvantage of the known RAW monitoring method is that it is described only in the conceptual form and insufficiently elaborated. In particular, it does not contain justification of how accurate and sensitive the methods and instrumentations are and ensure acceptable error of determination of the specific activity of HD-RN. Furthermore, the known method does not provide for tracking of the radionuclide content of $^{210}$Pb, $^{202}$Pb, $^{205}$Pb, monitoring of which is necessary when handling RAW of the power plant type being considered.

This invention solves the issue of improving technical and economic characteristics of the monitoring of radionuclide content of radioactive waste of power units equipped with fast reactors with liquid lead coolant, including improvement of the reliability and accuracy of measurements. The foregoing issue is solved by widening the scope of use and improvement of non-destructive RAW monitoring method using the nuclide vector and its adaptation to the foregoing types of power units.

The achievable technical result is a significant improvement of the selectivity, accuracy and sensitivity of determination of the HD-RN content in RAW, which allows extending the non-destructive monitoring method to such HD-RN, decay of which is accompanied by alpha- and beta-radiation, and which previously could not be identified by this method. This technical result is achieved due to the fact that the use of $^{207}$Bi isotope as a reference radionuclide, simultaneous measurements using gamma-ray spectrometric and liquid scintillation spectrometers and application of a new method of joint processing of measurement results independently obtained from these two sources of experimental data significantly improve the monitoring reliability and reduce the uncertainty and error values. The method's high selectivity enables to monitor the content of alpha- and beta-emitting radionuclides $^{210}$Pb, $^{202}$Pb, $^{205}$Pb, monitoring of which is necessary when handling RAW of the power plant type being considered. At the same time the invention's additional improvement of sensitivity and accuracy of measurements is achieved through the use of physical feature of the selected reference radionuclide ($^{207}$Bi), which is the presence of two separate gamma-radiation peaks.

The technical result of this invention is achieved by a method of monitoring the radionuclide content of RAW being generated during processing of spent nuclear fuel (NSF) of power units equipped with fast reactors with a liquid lead coolant, which includes preparatory step, where RAW streams are identified and their nuclide vectors are determined, and subsequent step of routine characterization of RAW in the streams, wherein samples are taken to produce test samples for determining the radionuclide vector in the stream, specific activities of radionuclides in the test samples, decay of which is accompanied by gamma radiation, are determined using gamma-ray spectrometry, a reference radionuclide and target hard-to-detect radionuclides (HD-RN) are selected and their specific activities and standard uncertainties of the activities against the activity of the reference radionuclide are determined, while at the step of routine RAW characterization the specific activities of the reference radionuclide only in RAW are measured using gamma-spectrometric non-destructive method, followed by calculation of the activities of the target HD-RN in RAW streams on the basis of the characteristics of identified nuclide-vectors, which were obtained at the preparatory step, while the activation product of the lead coolant $^{207}$Bi is used as the reference radionuclide and its specific activity is determined using gamma-ray spectrometric complex with resolution of not less than 8% along the 662 keV line, and $^{210}$Pb, $^{202}$Pb and $^{205}$Pb, decay of which is accompanied by alpha- and beta-radiation, are included in the list of target (HD-RN) of the nuclide vector, their activities are measured using liquid scintillation spectrometer, data on the activity of gamma-emitting radionuclides in a test sample are used in the processing of liquid scintillation spectrometer readings, while the processing is carried out using generalized least squares method with simultaneous consideration of uncertainty values of the measurement of specific activity of the reference radionuclide and HD-RN as weights of measured values.

The invention's technical result is also achieved by registering the spectrum and measuring the pulse count rate at two full absorption peaks, which correspond to gamma-radiation energy of 569.7 keV and 1063.7 keV, during determination of the specific activity of the reference radionuclide $^{207}$Bi by using gamma-ray spectrometer.

Another possible example of the method features additional monitoring of the content of activation products of structural steel $^{55}$Fe; $^{59}$Ni; $^{63}$Ni by using $^{60}$Co as the reference radionuclide, while the results are processed using generalized least squares method with simultaneous consideration of uncertainty values of the measurement of specific activity of the reference radionuclide and HD-RN as weights of measured values.

Yet another possible example of the method features monitoring of the content of fissure products of nuclear fuel $^{90}$Sr; $^{99}$Tc; $^{93}$Mo, $^{129}$I, $^{135}$Cs by using $^{137}$Cs with daughter $^{137m}$Ba or $^{137}$Cs ($^{137m}$Ba) as the reference radionuclide, while the results are processed using generalized least squares method with simultaneous consideration of uncertainty values of the measurement of specific activity of the reference radionuclide and HD-RN as weights of measured values.

The proposed method is implemented as follows.

During operation of power units equipped with fast reactors with liquid lead coolant, the current monitoring of radionuclide content of RAW is carried out within the routine characterization step using the nuclide vector methodology. This main step is preceded by preparatory step where a preliminary set of investigations, including identification of RAW streams and nuclide vector parameters to justify and prepare the routine characterization step, is performed.

Identification of streams means grouping waste by its chemical and physical properties and determining the list of reference radionuclides and radiologically significant HD-RN for each stream. In this invention the monitoring target is RAW stream related to compacted non-combustible waste structural materials of the primary circuit equipment and other solid radioactive waste, contaminated by the lead coolant's activation products - a HD-RN group consisting of $^{210}$Pb, decay of which is accompanied by alpha-radiation, and $^{202}$Pb and $^{203}$Pb, decay of which is accompanied by beta-radiation.

The nuclide vector for a given RAW stream is then established in accordance with the current regulations in the field of radionuclide activity monitoring, including international regulations [IAEA Nuclear Energy Series NW-T-1.18. Determination and use of scaling factors for waste characterization in NPP. IAEA, Vienna, Austria, 2009], [ISO 21238-2007 Scaling factor method to determine the radioactivity of low- and intermediate-level radioactive waste packages generated at nuclear power plants]. The ratio between radionuclide activities is described by a function obtained by mathematical processing of measurement results.

The correlation relationship between specific activities of radionuclides is established within the stream and numerically expressed by a set of ratios of the partial specific activity of HD-RN being rated to the specific activity of the reference radionuclide. As result, at the routine characterization step it becomes possible to limit to the measurement of the activity of reference easy-to-detect gamma-emitting radionuclides with considerable energy and decay ($^{60}$Co, $^{137}$Cs, $^{207}$Bi).

The specific activity of waste radionuclide at the time of waste generation can be represented as the sum of a significant number of independent random variables. In this case, according to the central limit theorem of probability theory, it will have a normal distribution. As experimental data show, for RAW generated from a single source, distribution of the specific activity of a single radionuclide has a normal or log-normal form. Measurements of 20 to 30 samples must be used for statistical analysis to achieve an expansion factor of about 2, while calculating the total uncertainty at a confidence level of 0.95.

Thus, in accordance with the invention, samples are taken to produce test samples for determining the radionuclide vector in the stream, specific activities of radionuclides in the test samples, which decay is accompanied by gamma radiation, are determined using gamma-ray spectrometry, a reference radionuclide and target hard-to-detect radionuclides (HD-RN) are then selected. In this method, $^{207}$Bi is assigned as the reference radionuclide for group of activation products of the lead coolant, while $^{210}$Pb, which decay is accompanied by alpha-radiation, and $^{202}$Pb and $^{203}$Pb, which decay is accompanied by beta-radiation, are taken as target HD-RN. Assigning $^{207}$Bi isotope as the reference radionuclide is possible due to the use in reactors of liquid lead as coolant, which activation produces radionuclides $^{210}$Po, $^{207}$Po, $^{205}$Po, $^{203}$Po, $^{206}$Bi , $^{207}$Bi, $^{208}$Bi, $^{210}$Bi, $^{210}$Pb, $^{202}$Pb, $^{205}$Pb. [G.L. Khorasanov, A.I. Blokhin, Fundamentals of Creation of a Low-Activated Lead Coolant with Isotope Enrichment for Advanced Nuclear Power Plants. Issues of Nuclear Science and Engineering. Nuclear Constant Series, 2001, Issue 1]. A specific feature of radionuclide $^{207}$Bi with 32-year half-life and beta-radiation energy limit of 765 keV is the presence of two main lines of 569.7 keV and 1063.7 keV in the gamma-radiation spectrum. During determination of the specific activity of the reference radionuclide $^{207}$Bi, the pulse count rate is measured at total absorption peaks, which correspond to gamma-radiation energies of 569.7 keV and 1063.7 keV, i.e. $N_1$ and $N_2$, $c^{-1}$ respectively. The use of two peaks allows reducing the uncertainty of measurements of $^{207}$Bi activity, Bq, through reduction of the relative standard uncertainty by type A due to the stochastic nature of the radiation and calculated by the formula:

$$u_A = \frac{1}{N} \cdot \sqrt{N};  \qquad\qquad (1)$$

in case of using two-peak statistics: $u_A = \frac{1}{(N_1+N_2)} \cdot \sqrt{N_1 + N_2}$ ,C

Gamma-radiation spectra of reference radionuclides are measured using gamma-ray spectrometer with at least 8 % resolution of 662 keV line, which is due to the presence in RAW of a number of radionuclides with similar gamma-radiation energy of $^{137}$Co (662 keV), $^{134}$Co (569 keV. 605 keV), $^{207}$Bi (569,7 keV) etc.

A distinctive feature of this method is that at the step of determination of radionuclide specific activity ratios in samples, the activity of alpha- and beta-emitting HD-RN is measured using liquid scintillation spectrometer and, as a priori information for spectrum processing, the activity values measured with gamma-ray spectrometer in reference radionuclide samples, which decay is accompanied both by alpha- or beta- and gamma-radiation. It allows achieving a significant accuracy improvement due to the rating of mixed radiation spectra and mutual verification of the two measurement methods.

Another distinctive feature of this method is that not only the uncertainty of activity measurements of the reference radionuclide, but also the uncertainty of HD-RN activity measurements is estimated during sample analysis to use their values as "weights" during calculation of the average activity ratio in samples and correlation-and-regression analysis of experimental data.

The correlation between the specific activity of the hard-to-detect radionuclide and the reference one is confirmed, if the correlation coefficient $R_A$ is greater than or equal to the following criterion value:

$$R_A = \frac{\sum_{k=1}^{n} A_{r,k} A_{i,k} - \left(\sum_{k=1}^{n} A_{r,k} \sum_{k=1}^{n} A_{i,k}\right)/n}{\sqrt{\left[\sum_{k=1}^{n} A_{r,k}^2 - \left(\sum_{k=1}^{n} A_{r,k}\right)^2/n\right]\left[\sum_{k=1}^{n} A_{i,k}^2 - \left(\sum_{k=1}^{n} A_{i,k}\right)^2/n\right]}} \qquad (2)$$

where $A_{i,k}$ - activity of the i-th hard-to-detect radionuclide in the k-th sample; $A_{r,k}$ - activity of the reference radionuclide in the $k$-th sample; $n$ - number of samples.

The criterion value is established on the basis of required accuracy of determination of the specific activity of HD-RN. In most countries that use a similar methodology, it is established at 0.7 [Determination and Use of Scaling Factors for Waste Characterization in NPP. IAEA Nuclear Energy Series NW-T-1.18. Vienna, IAEA, 2009].

To establish the correlation relationship between the specific activity of HD-RN and the reference radionuclide, the geometric mean is used, since individual values in the set of experimental data are significantly distant from others. The proposed method uses the geometric weighted average of the specific activity of HD-RN and the reference radionuclide to establish the numerical relationship. This approach allows to take into account the uncertainty of each measured value as a "weight". For the $i$-th radionuclide, the geometric weighted average of the ratio is determined by the expression:

$$\overline{K}_i = exp\left(\sum_{k=1}^{n}\left(ln\,K_{i,k}/u_{K_{i,k}}^2\right)/\sum_{k=1}^{n}\left(1/u_{K_{i,k}}\right)^2\right) \qquad (3)$$

where $K_{i,k} = A_{i,k}/A_{r,k}$ - ratio of the activity of the $i$-th and the reference radionuclide in the $k$-th sample;

$u_{K_{i,k}} = \sqrt{u_{A_{i,k}}^2 + u_{A_{r,k}}^2}$ relative standard uncertainty of the calculated ratio of the $i$-th radionuclide in the $k$-th sample; $u_{A_{i,k}}, u_{A_{r,k}}$ - relative standard uncertainty of the specific activity of the $i$-th HD-RN and the reference radionuclide in the $k$-th sample respectively, which are used as weights of measured values.

If there is no confident correlation between the specific activity of the i-th SDR and the reference radionuclide in waste being monitored ($R_A$ is less than the criterion value), it is suggested the ratio between their logarithms be determined as follows:

$$ln(A_i) = ln(a) + b\,ln(A_r), \qquad (4)$$

where $a, b$ - constants.

For correlation-regression analysis of experimental data expressed as logarithms of the specific activity of HD-RN and the reference radionuclide, the generalized least squares method is applied [R.M. Seidel Estimation of Regression Parameter Error in the Least Squares Method - Atomic Energy, 1994, T.77, Issue 6. Moscow, 1994, pp.463-466], which allows to simultaneously take into account uncertainties of activity measurements of these two radionuclides during construction of the nuclide vector. At the same time, the solution (ln(a) and b values with corresponding uncertainties) is found using iterative calculations by the Newton-Raphson method.

When using the proposed new method of nuclide vector construction, the accuracy and sensitivity of HD-RN monitoring in RAW being generated during processing of SNF of power units equipped with fast reactors with liquid lead coolant is significantly improved.

Within this method, it is possible to additionally monitor the radionuclide content in other RAW streams using the proposed nuclide vector calculation scheme. In particular, if it is necessary to characterize activation products of structural steel $^{55}$Fe; $^{59}$Ni; $^{63}$Ni, $^{60}$Co is assigned as the reference radionuclide, while the results are processed using generalized least squares method with simultaneous consideration of uncertainty values of the measurement of specific activity of the reference radionuclide and HD-RN as weights of measured values.

Another example of this method features monitoring of the content of fissure products of nuclear fuel $^{90}$Sr; $^{99}$Tc; $^{93}$Mo, $^{129}$I, $^{135}$Cs by using $^{137}$Cs with daughter $^{137m}$Ba or $^{137}$Cs ($^{137m}$Ba) as the reference radionuclide, while the results are processed using generalized least squares method with simultaneous consideration of uncertainty values of the measurement of specific activity of the reference radionuclide and HD-RN as weights of measured values.

**Claims**

1. A method of monitoring the radionuclide content of radioactive waste, RAW, generated during processing of spent nuclear fuel, SNF, from power units equipped with fast reactors with a liquid lead coolant, which includes preparatory step in which RAW streams are identified and the radionuclide vectors thereof are determined, and subsequent step of routine characterization of RAW in the streams, wherein samples are collected to produce test samples in order to determine a radionuclide vector in the stream, the specific activities of radionuclides in the test samples, which decay is accompanied by gamma radiation, are determined using gamma-ray spectrometry, a reference radionuclide and target hard-to-detect radionuclides, HD-RN, are selected and specific activities and standard uncertainties of the activities thereof are determined in relation to the activity of the reference radionuclide, wherein at the step of routine RAW characterization the specific activities in RAW are measured for the reference radionuclide only, using gamma-ray spectrometric non-destructive method, followed by calculation of the activities of the target HD-RN in RAW streams on the basis of the characteristics of the identified radionuclide vectors obtained at the preparatory step, wherein the activation product of a lead coolant $^{207}$Bi is used as the reference radionuclide, the specific activity of which is determined using gamma-ray spectrometry apparatus having a resolution of at least 8% along the 662 keV line, and$^{210}$Pb, $^{202}$Pb and $^{205}$Pb, which decay is accompanied by alpha- and beta-radiation, are included in the list of target, HD-RN, of the radionuclide vector, their activities are measured using liquid scintillation spectrometer, data on the activity of gamma-emitting radionuclides in the test sample are used in the processing of liquid scintillation spectrometer readings, wherein the processing is carried out using the generalized least squares method, taking into account both the uncertainty values of the specific activity measurements of the reference radionuclide and those of the HD-RN as weights of measured values.

2. The method according to claim 1, wherein during determination of the specific activity of the reference radionuclide Bi-207, the pulse count rate is measured at two total absorption peaks, which correspond to gamma-radiation energies of 569.7 keV and 1063.7 keV.

3. The method according to claim 1, wherein the content of activation products of structural steel $^{55}$Fe; $^{59}$Ni; $^{63}$Ni is additionally monitored using $^{60}$Co as the reference radionuclide, while the results are processed using generalized least squares method taking into account both the uncertainty values of the specific activity measurement of the reference radionuclide and those of the HD-RN as weights of measured values.

4. The method according to claim 1, wherein the content of fission products of nuclear fuel $^{90}$Sr; $^{99}$Tc; $^{93}$Mo, $^{129}$I, $^{135}$Cs is monitored using $^{137}$Cs with daughter $^{137m}$Ba or $^{137}$Cs ($^{137m}$Ba) as the reference radionuclide, while the results are processed using generalized least squares method taking into account both the uncertainty values of the specific activity measurement of the reference radionuclide and those of HD-RN as weights of measured values.

**Patentansprüche**

1. Verfahren zur Überwachung des Radionuklidgehalts von radioaktiven Abfällen RAA, die bei der Verarbeitung von abgebranntem Kernbrennstoff AKB von Leistungseinheiten ausgestattet mit den schnellen Reaktoren mit flüssigem Bleikühlmittel erzeugt werden, umfassend eine Vorbereitungsstufe, in der die radioaktiven Abfallströme identifiziert und ihre Radionuklidvektoren bestimmt werden, und die nachfolgende Stufe der routinemäßigen Charakterisierung der radioaktiven Abfälle in den Strömen, wobei die Proben zur Herstellung der Testproben entnommen werden, um den Radionuklidvektor im Strom zu bestimmen, mittels gammaspektrometrischer Analyse spezifische Aktivitäten von Radionukliden in den Testproben bestimmt werden, deren Zerfall von Gammastrahlung begleitet wird, ein Referenzradionuklid und schwierig nachzuweisende Radionuklide SN-RN als Ziel ausgewählt werden und ihre spezifischen Aktivitäten und Standardunsicherheiten der Aktivität in Bezug auf die Aktivität des Referenzradionuklids bestimmt werden, wobei in der Stufe der routinemäßigen Charakterisierung von RAA spezifische Aktivitäten in RAA nur für Referenzradionuklid mittels gammaspektrometrischer zerstörungsfreier Methode gemessen werden, dann auf der Grundlage der Eigenschaften der in der Vorbereitungsphase ermittelten identifiziertenRadionuklidvektoren die Aktivität der Ziel-SN-RN in den radioaktiven Abfallströmen berechnet wird, wobei ein Produkt der Aktivierung eines Bleikühlmittels $^{207}$Bi als das Referenzradionuklid verwendet wird und seine spezifische Aktivität unter Verwendung einer gammaspektrometrischen Vorrichtung mit einer Auflösung von mindestens 8% entlang der Linie von 662 keV bestimmt wird, die Liste der Ziel-SN-RN des Radionuklidvektors $^{210}$Pb, $^{202}$Pb und $^{205}$Pb umfasst, deren Zerfall von Alpha- und Beta-Strahlung begleitet wird, ihre Aktivität unter Verwendung eines Flüssigkeitsszintillationsspektrometers gemessen wird, Daten über die Aktivität von gammastrahlenden Radionukliden in der Testprobe bei der Verarbeitung von Messwerten des Flüssigkeitsszintillationsspektrometers verwendet werden, wobei die Verarbeitung unter Verwendung eines verallgemeinerten Verfahrens der kleinsten Quadrate unter gleichzeitiger Berücksichtigung von Unsicherheitswerten von Messungen der spezifischen Aktivität des Referenzradionuklids und SN-RN als Gewichte von Messwerten durchgeführt wird.

2. Verfahren nach Anspruch 1, wobei während der Bestimmung der spezifischen Aktivität des Referenzradionuklids Bi-207 die Impulszählrate in zwei Peaks vollständiger Absorption gemessen wird, die den Gammastrahlenenergien von 569,7 keV und 1063,7 keV entsprechen.

3. Verfahren nach Anspruch 1, wobei der Gehalt der Aktivierungsprodukte von Baustahl $^{55}$Fe; $^{59}$Ni; $^{63}$Ni zusätzlich mit $^{60}$Co als Referenzradionuklid überwacht wird, während die Ergebnisse unter Verwendung des verallgemeinerten Verfahrens der kleinsten Quadrate unter Berücksichtigung der Unsicherheitswerte der spezifischen Aktivitätsmessung des Referenzradionuklids und SN-RN als Gewichte der Messwerte verarbeitet werden.

**4.** Verfahren nach Anspruch 1, wobei der Gehalt an Kernbrennstoffspaltungsprodukten $^{90}$Sr; $^{99}$Tc, $^{93}$Mo $^{129}$I, $^{135}$Cs unter Verwendung von $^{137}$Cs mit Tochterisotop $^{137m}$Ba oder $^{137}$Cs ($^{137m}$Ba) als Referenzradionuklid überwacht wird, während die Verarbeitung der Ergebnisse unter Verwendung des verallgemeinerten Verfahrens der kleinsten Quadrate unter Berücksichtigung der Unsicherheitswerte der spezifischen Aktivitätsmessung des Referenzradionuklids und SN-RN als Gewichte der Messwerte erfolgt.

**Revendications**

**1.** Méthode de contrôle des teneurs en radionucléides dans les déchets radioactifs DRA générés lors de traitement du combustible nucléaire consommé CNC provenant des centrales énergétiques équipées des réacteurs à neutrons rapides à caloporteur plomb, qui inclut une étape préparatoire au cours de laquelle les flux des DRA sont identifiés et leurs vecteurs de radionucléides sont déterminés, et une étape suivante de la caractérisation de routine des DRA dans les flux, dans laquelle les échantillons sont collectées pour produire des échantillons d'essai afin de déterminer un vecteur de radionucléides dans le flux, les activités spécifiques des radionucléides dans les échantillons d'essai, dont la désintégration s'accompagne d'un rayonnement gamma, sont déterminées en utilisant la spectrométrie gamma, un radionucléide de référence et des radionucléides difficilement détectables de RN-DD ciblés sont choisis et leurs activités spécifiques et leurs incertitudes-type des activités sont déterminées par rapport à l'activité du radionucléide de référence, dans laquelle à l'étape de la caractérisation de routine des DRA, les activités spécifiques dans les DRA sont mesurées pour le radionucléide de référence uniquement en utilisant la méthode de spectrométrie gamma non destructive, puis le calcul des activités des RN-DD ciblés dans les flux des DRA sur la base des caractéristiques des vecteurs de radionucléides identifiées obtenus à l'étape préparatoire, dans laquelle le produit de l'activation du caloporteur plomb $^{207}$Bi est utilisé en tant que radionucléide de référence, dont activité spécifique est déterminée en utilisant un appareil de spectrométrie gamma ayant une résolution d'au moins 8 % le long de la ligne de 662 keV, et $^{210}$Pb, $^{202}$Pb et $^{205}$Pb, dont la désintégration s'accompagne de rayonnements alpha et bêta, sont inclus dans la liste des RN-DD ciblés du vecteur de radionucléides, leurs activités sont mesurées en utilisant la spectromètre à scintillation liquide, les données relatives à l'activité des radionucléides émetteurs de rayons gamma dans l'échantillon d'essai sont utilisées dans le traitement des lectures du spectromètre à scintillation liquide, dans laquelle le traitement est effectué en utilisant la méthode des moindres carrés généralisés, en tenant compte à la fois des valeurs d'incertitude de la mesure de l'activité spécifique du radionucléide de référence et de celles des RN-DD en tant que pondérations des valeurs mesurées.

**2.** Méthode selon la revendication 1, dans laquelle lors de détermination de l'activité spécifique du radionucléide de référence Bi-207, le taux de comptage des impulsions est mesuré à deux pics d'absorption totale, qui correspondent à des énergies de rayonnement gamma de 569.7 keV et 1063.7 keV.

**3.** Méthode selon la revendication 1, dans laquelle la teneur en produits d'activation de l'acier de construction $^{55}$Fe ; $^{59}$Ni ; $^{63}$Ni est aussi contrôlée en utilisant le $^{60}$Co en tant que radionucléide de référence, tandis que les résultats sont traités en utilisant la méthode des moindres carrés généralisés en tenant compte à la fois des valeurs d'incertitude de la mesure de l'activité spécifique du radionucléide de référence et de celles de RN-DD en tant que pondérations des valeurs mesurées.

**4.** Méthode selon la revendication 1, dans laquelle la teneur en produits de fission du combustible nucléaire $^{90}$Sr ; $^{99}$Tc ; $^{93}$Mo, $^{129}$I, $^{135}$Cs est contrôlée en utilisant $^{137}$Cs avec fille $^{137m}$Ba ou $^{137}$Cs ($^{137m}$Ba) en tant que radionucléide de référence, tandis que les résultats sont traités en utilisant la méthode des moindres carrés généralisés en tenant compte à la fois des valeurs d'incertitude de la mesure de l'activité spécifique du radionucléide de référence et de celles de RN-DD en tant que pondérations des valeurs mesurées.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5546174 B

**Non-patent literature cited in the description**

- Method of assessment of the content of alpha- and beta-emitting radionuclides in RAW of radiochemical production by matrix of present gamma-emitting radionuclides. *Nuclear and Radiation Safety,* 2017, vol. 85 (3
- **ZHEREBTSOV et al.** *Nuclear and Radiation Safety,* 30 November 2016, vol. 3 (85), 1-9
- **G.L. KHORASANOV ; A.I. BLOKHIN.** Fundamentals of Creation of a Low-Activated Lead Coolant with Isotope Enrichment for Advanced Nuclear Power Plants. *Issues of Nuclear Science and Engineering. Nuclear Constant Series,* 2001, (1
- Determination and Use of Scaling Factors for Waste Characterization in NPP. *IAEA Nuclear Energy Series NW-T-1.18,* 2009
- **R.M. SEIDEL.** Estimation of Regression Parameter Error in the Least Squares Method. *Atomic Energy,* 1994, (6), 463-466